Europäisches Patentamt

European Patent Office

Office européen des brevets

(19)

(11) EP 0 572 646 B1

(12) FASCICULE DE BREVET EUROPEEN

(45) Date de publication et mention
de la délivrance du brevet:
**13.03.1996 Bulletin 1996/11**

(51) Int Cl.[6]: **C23C 4/08**, C22C 21/12,
C23C 4/06, C22C 21/00

(21) Numéro de dépôt: **93902342.0**

(22) Date de dépôt: **17.12.1992**

(86) Numéro de dépôt international:
**PCT/FR92/01197**

(87) Numéro de publication internationale:
**WO 93/13237 (08.07.1993 Gazette 1993/16)**

(54) **Utilisation d'un alliage d'aluminium quasi-cristallin pour l'élaboration d'un élément de protection thermique**

Verwendung einer quasi-cristalline Aluminiumlegierung als thermisches Schutzelement

Use of a quasicrystalline aluminium alloy in a thermal protection element

(84) Etats contractants désignés:
**BE CH DE FR GB IT LI NL**

(30) Priorité: **20.12.1991 FR 9115866**

(43) Date de publication de la demande:
**08.12.1993 Bulletin 1993/49**

(73) Titulaire: **CENTRE NATIONAL DE
LA RECHERCHE SCIENTIFIQUE (CNRS)
F-75700 Paris Cedex 07 (FR)**

(72) Inventeurs:
• **DUBOIS, Jean-Marie
F-54340 Pompey (FR)**
• **ARCHAMBAULT, Pierre
F-54000 Nancy (FR)**
• **COLLERET, Bernard
F-54140 Jarville (FR)**

(74) Mandataire: **Sueur, Yvette et al
Cabinet SUEUR & L'HELGOUALCH,
78, Rue Carnot
F-95240 Cormeilles-en-Parisis (FR)**

(56) Documents cités:
**EP-A- 0 100 287          EP-A- 0 356 287**

• **JOURNAL OF MATERIALS SCIENCE LETTERS
vol. 10, no. 9, 1 Mai 1991, LONDON,GB pages
537 - 541 J.M. DUBOIS 'quasicrystalline
low-friction coatings'**

**Description**

La présente invention a pour objet l'utilisation, pour l'élaboration d'un élément de protection thermique, d'un alliage d'aluminium quasi-cristallin.

Les barrières thermiques sont des assemblages d'un ou plusieurs matériaux destinés à limiter le transfert thermique vers ou à partir de pièces et composants d'appareillages dans de nombreux dispositifs domestiques ou industriels. On peut citer par exemple l'utilisation de barrières thermiques dans les dispositifs de chauffage ou de cuisson, les fers à repasser au niveau de la fixation de la partie chaude sur la carcasse et de l'isolation thermique; dans les automobiles, en plusieurs points tels que le turbocompresseur, le pot d'échappement, l'isolation de l'habitacle, etc.; dans l'aéronautique, par exemple sur la partie arrière des compresseurs et des réacteurs.

Les barrières thermiques sont quelquefois employées isolément sous la forme d'écran, mais très souvent elles sont directement associées à la source de chaleur ou à la partie à protéger pour des raisons de tenue mécanique. Ainsi, on utilise des feuilles de mica, des plaques de céramique, etc..., dans les ustensiles électroménagers, en les adaptant par vissage ou collage, ou encore des feuilles de laine de verre agglomérée supportées par une tôle métallique. Un procédé particulièrement avantageux pour adjoindre une barrière thermique à une pièce, en particulier à une pièce métallique, consiste à déposer sur un substrat le matériau constituant la barrière sous forme de couche d'épaisseur déterminée par une technique de projection thermique telle que la projection plasma par exemple.

Très souvent, il est recommandé d'associer la barrière thermique, qui peut d'ailleurs comprendre plusieurs couches, à d'autres matériaux également déposés en couche par projection thermique. Ces autres matériaux peuvent être destinés à assurer la protection de la barrière vis-à-vis d'agressions extérieures comme par exemple des chocs mécaniques, un milieu corrosif, etc... ou encore à faciliter son accrochage au substrat sous-jacent. Ce point est particulièrement important dans le cas de barrières thermiques fonctionnant en condition de cyclage thermique ou à haute température. Alors, les contraintes mécaniques existant au niveau de l'interface avec le substrat et résultant des différences de coefficient de dilatation thermique du substrat et du dépôt entraînent rapidement la détérioration de la barrière par cisaillement, quand elles n'interdisent pas son emploi. Pour remédier à cet inconvénient, il est souvent fait usage d'un dépôt intermédiaire, appelé sous-couche d'accrochage, qui devient plastique dans la zone d'utilisation en température de la barrière, ce qui annule les contraintes d'interface de la barrière.

Le matériau le plus fréquemment utilisé dans l'aéronautique pour constituer des barrières thermiques est la zircone yttriée qui résiste à des températures très élevées. Le dépôt de zircone est réalisé par projection plasma selon une technique classique à partir de poudre du matériau. La zircone présente une faible diffusivité thermique ($\alpha = 10^{-6}$ m$^2$/s). Toutefois, elle présente une masse spécifique $\rho$ relativement élevée, ce qui constitue un inconvénient pour certaines applications ; en outre, certaines de ses propriétés mécaniques, telles que la dureté, la résistance à l'usure et à l'abrasion sont faibles.

D'autres matériaux sont utilisés comme barrière thermique. On peut citer l'alumine qui présente une masse spécifique inférieure à celle de la zircone, une diffusivité et une chaleur spécifique supérieures à celles de la zircone, mais dont les propriétés mécaniques ne sont pas satisfaisantes. On peut également citer les aciers inoxydables et certains aciers réfractaires qui offrent des propriétés d'isolation thermique, mais qui présentent une masse spécifique élevée.

EP-A-0 356 287 décrit des alliages d'aluminium quasi-cristallins et leur utilisation dans le domaine des ustensiles de cuisson, des paliers anti-friction, des surfaces anti-usures et des surfaces de référence.

Des alliages quasi-cristallins à base d'aluminium, de cuivre et de fer, ainsi que leur utilisation comme revêtement anti-friction, sont en outre décrits par J.M. Dubois, et al, Journal of Materials Science Letters, 10, (1991) 537-541.

La présente invention a pour but de fournir des éléments de protection thermique, sous forme de barrière thermique ou sous forme de sous-couche d'accrochage pour des barrières thermiques, présentant de bonnes propriétés d'isolation thermique, de bonnes propriétés mécaniques, une faible masse spécifique, une bonne résistance à la corrosion, surtout à l'oxydation, et une grande facilité de mise en oeuvre.

La présente invention a pour objet l'utilisation pour l'élaboration d'un élément de protection thermique d'un substrat, d'un matériau qui est déposé sur le substrat par projection.

Un élément de protection thermique d'un substrat de la présente invention est caractérisé en ce qu'il est constitué par un matériau qui est déposé sur le substrat par projection thermique et qui est constitué essentiellement par un alliage quasicristallin d'aluminium présentant une diffusivité thermique mesurée à la température ambiante inférieure à 2,5.10$^{-6}$m$^2$/s, et une diffusivité thermique mesurée dans l'intervalle de température 650-750°C qui n'excède pas la diffusivité thermique mesurée à la température ambiante de plus d'un facteur 3. De préférence, la diffusivité à température ambiante est inférieure à 1,6. 10$^{-6}$ m$^2$/s.

Dans le présent texte, par "alliage quasicristallin", on entend un alliage constitué d'une ou plusieurs phases quasi-cristallines qui sont soit des phases quasi-cristallines au sens strict, soit les phases approximantes. Les phases quasi-cristallines au sens strict sont des phases présentant des symétries de rotation normalement incompatibles avec la symétrie de translation, c'est-à-dire des symétries d'axe de rotation d'ordre 5, 8, 10 et 12, ces symétries étant révélées par la diffraction du rayonnement. A titre d'exemple, on peut citer la phase icosaédrique de groupe ponctuel m$\bar{3}\,\bar{5}$ (cf.

D. Shechtman, I. Blech, D. Gratias, J.W. Cahn, Metallic Phase with Long-Range Orientational Order and No Translational Symmetry, Physical Review Letters, Vol. 53, n° 20, 1984, pages 1951-1953) et la phase décagonale de groupe ponctuel 10/mmm (cf. L. Bendersky, Quasicrystal with One Dimensional Translational Symmetry and a Tenfold Rotation Axis, Physical Review Letters, Vol. 55, n° 14, 1985, pages 1461-1463). Le diagramme de diffraction des rayons X d'une phase décagonale vraie a été publié dans "Diffraction approach to the structure of decagonal quasicrystals, J.M. Dubois, C. Janot, J. Pannetier, A. Pianelli, Physics Letters A 117-8 (1986) 421-427".

Les phases approximantes ou composés approximants sont des cristaux vrais dans la mesure où leur structure cristallographique reste compatible avec la symétrie de translation, mais qui présentent, dans le cliché de diffraction d'électrons, des figures de diffraction dont la symétrie est proche des axes de rotation 5, 8, 10 ou 12.

Parmi ces phases, on peut citer à titre d'exemple la phase orthorhombique $O_1$, caractéristique d'un alliage ayant la composition atomique $Al_{65}Cu_{20}Fe_{10}Cr_5$, dont les paramètres de maille sont : $a_o^{(1)} = 2,366$, $b_o^{(1)} = 1,267$, $c_o^{(1)} = 3,252$ en nanomètres. Cette phase orthorhombique $O_1$ est dite approximante de la phase décagonale. Elle en est d'ailleurs si proche qu'il n'est pas possible de distinguer son diagramme de diffraction des rayons X de celui de la phase décagonale.

On peut également citer la phase rhomboédrique de paramètres $a_R = 3,208$ nm, $\alpha = 36°$, présente dans les alliages de composition voisine de $Al_{64}Cu_{24}Fe_{12}$ en nombre d'atomes (M. Audier et P. Guyot, Microcrystalline AlFeCu Phase of Pseudo Icosahedral Symmetry, in Quasicrystals, eds. M.V. Jaric et S. Lundqvist, World Scientific, Singapore, 1989). Cette phase est une phase approximante de la phase icosaédrique.

On peut aussi citer des phases $O_2$ et $O_3$ orthorhombiques de paramètres respectifs $a_o^{(2)} = 3,83$ ; $b_o^{(2)} = 0,41$ ; $c_o^{(2)} = 5,26$ et $a_o^{(3)} = 3,25$ ; $b_o^{(3)} = 0,41$ ; $c_o^{(3)} = 9,8$ en nanomètres, présentes dans un alliage de composition $Al_{63}Cu_{17,5}Co_{17,5}Si_2$ en nombre d'atomes ou encore la phase orthorhombique $O_4$ de paramètres $a_o^{(4)} = 1,46$ ; $b_o^{(4)} = 1,23$ ; $c_o^{(4)} = 1,24$ en nanomètres, qui se forme dans l'alliage de composition $Al_{63}Cu_8Fe_{12}Cr_{12}$ en nombre d'atomes.

On peut encore citer une phase C, de structure cubique, très souvent observée en coexistence avec les phases approximantes ou quasicristallines vraies. Cette phase qui se forme dans certains alliages Al-Cu-Fe et Al-Cu-Fe-Cr, consiste en une surstructure, par effet d'ordre chimique des éléments d'alliage par rapport aux sites d'aluminium, d'une phase de structure type Cs-Cl et de paramètre de réseau $a_1 = 0,297$nm.

Un diagramme de diffraction de cette phase cubique a été publié (C. Dong, J.M. Dubois, M. de Boissieu, C. Janot ; Neutron diffraction study of the peritectic growth of the $Al_{65}Cu_{20}Fe_{15}$ icosahedral quasicrystal; J. Phys. Condensed Matter, 2 (1990), 6339-6360) pour un échantillon de phase cubique pure et de composition $Al_{65}Cu_{20}Fe_{15}$ en nombre d'atomes. (à 4,5% près) et

$$c_H = 3\sqrt{3}\ a_1/2$$

(à 2,5% près). Cette phase est isotype d'une phase hexagonale, notée $\Phi AlMn$, découverte dans des alliages Al-Mn contenant 40% en poids de Mn [M.A. Taylor, Intermetallic phases in the Aluminium-Manganese Binary System, Acta Metallurgica 8 (1960) 256].

La phase cubique, ses surstructures et les phases qui en dérivent, constituent une classe de phases approximantes des phases quasicristallines de compositions voisines.

Parmi les alliages quasi-cristallins utilisables pour l'élaborarion d'un élément de protection thermique d'un substrat selon la présente invention, on peut citer ceux qui présentent l'une des compositions nominales suivantes :

- $Al_aCu_bFe_cY_eI_g$, (I) dans laquelle Y représente au moins un élément choisi parmi V, Mo, Ti, Zr, Nb, Cr, Mn, Ru, Rh, Ni, Mg, W, Si et les terres rares, I représente les impuretés d'élaboration inévitables, $0 \le g \le 2$, $14 \le b \le 30$, $7 \le c \le 20$, $0 \le e \le 10$, $c+e \le 10$ et $a+b+c+e+g=100\%$ en nombre d'atomes ;

- $Al_aCu_bFe_cX_dY_eI_g$, (II) dans laquelle X représente au moins un élément choisi parmi B, C, P, S, Ge et Si, Y représente au moins un élément choisi parmi V, Mo, Ti, Zr, Nb, Cr, Mn, Ru, Rh, Ni, Mg, W, Hf, Ta et les terres rares, I représente les impuretés d'élaboration inévitables, $0 \le g \le 2$, $14 \le b \le 30$, $7 \le c \le 20$, $0 \le d \le 5$, $21 \le b+c+e \le 45$, et $a+b+c+d+e+g=100\%$ en nombre d'atomes ;

- $Al_aPd_bMn_cX_dY_eT_fI_g$ (III) dans laquelle X représente au moins un métalloïde choisi parmi B, C, Si, Ge, P, et S ; Y représente au moins un métal choisi parmi Fe, Mn, V, Ni, Cr, Zr, Hf, Mo, W, Nb, Ti, Rh, Ru, Re, Ta ; T est au moins une terre rare ; I représente les impuretés d'élaboration inévitables ; avec $a+b+c+d+e+f+g=100\%$ atomique ; $15 \le b \le 25$ ; $6 \le c \le 16$ ; $21 \le b+c+e \le 45$ ; $0 \le f \le 4$ ; $0 \le g \le 2$ ; $0 \le d \le 5$ ;

- $Al_aCu_bCo_cX_dY_eT_fI_g$ (IV) dans laquelle X représente au moins un métalloïde choisi parmi B, C, Si, Ge, P et S ; Y représente au moins un métal choisi parmi Fe, Mn, V, Ni, Cr, Zr, Hf, Mo, W, Nb, Ti, Rh, Ru, Re ; T est au moins une terre rare ; I représente les impuretés d'élaboration inévitables; avec $a+b+c+d+e+f+g=100\%$ atomique ; $14 \le b \le 27$ ; $8 \le c \le 24$ ; $28 \le b+c+e \le 45$ ; $0 \le f \le 4$ ; $0 \le d \le 5$ ; $0 \le g \le 2$ ;

représente au moins un métal choisi parmi Fe, Mn, V, Ni, Cr, Zr, Hf, Mo, W, Nb, Ti, Rh, Ru, Re ; T est au moins une terre rare ; I représente les impuretés d'élaboration inévitables; avec $a+b+c+d+e+f+g=100\%$ atomique ; $14 \le b \le 27$ ; $8 \le c \le 24$ ; $28 \le b+c+e \le 45$ ; $0 \le f \le 4$ ; $0 \le d \le 5$ ; $0 \le g \le 2$ ;

- $Al_aX_dY_eI_g$, (V) dans laquelle X représente au moins un élément choisi parmi B, C, P, S, Ge et Si, Y représente au moins un élément choisi parmi V, Mo, Cr, Mn, Fe, Co, Ni, Ru, Rh et Pd, I représente les impuretés d'élaboration inévitables, $0 \leq g \leq 2$, $0 \leq d \leq 5$, $18 \leq e \leq 29$, et a+d+e+g=100% en nombre d'atomes.

Les matériaux utilisés pour la réalisation d'éléments de protection thermique selon la présente invention présentent des valeurs de diffusivité thermique $\alpha$ voisines de $10^{-6}$ m²/s qui sont très comparables à la diffusivité thermique de la zircone. Compte-tenu de la plus faible masse spécifique $\rho$ de ces matériaux, la conductibilité thermique $\lambda = \alpha \rho Cp$ au voisinage de la température ambiante ne présente pas de différence significative par rapport à celle de la zircone. Les alliages quasicristallins sont donc des substituts indiqués au remplacement de nombreux matériaux de barrière thermique, et en particulier de la zircone, par rapport à laquelle ils présentent des avantages de faible masse spécifique, d'excellentes propriétés mécaniques en ce qui concerne la dureté, la résistance améliorée à l'usure, à l'abrasion, à la rayure, ainsi qu'à la corrosion.

La diffusivité des matériaux constituant les éléments de protection thermique de la présente invention est réduite lorsque la porosité des matériaux augmente. La porosité d'un alliage quasi-cristallin peut être augmentée par un traitement thermique approprié. Ainsi par exemple, l'alliage $Al_{63,5}Cu_{24}Fe_{12,5}$, élaboré à l'état brut, présente une porosité de l'ordre de 3%, mesurée sur une coupe métallographique par analyse d'image classique. Après un traitement thermique de trois heures à 850°C, la porosité est de l'ordre de 8%. Il est particulièrement avantageux d'utiliser des alliages quasi-cristallins présentant une porosité supérieure à 10%.

Les matériaux constituant les éléments de protection thermique de la présente invention peuvent contenir une faible proportion de particules conductrices de la chaleur, par exemple des cristaux d'aluminium métallique. La conduction thermique du matériau sera dominée par les propriétés de conduction de la matrice tant que les particules ne coalescent pas, c'est-à-dire tant que leur proportion volumique reste en-dessous du seuil de percolation. Pour des particules approximativement sphériques et ayant un rayon faiblement distribué, ce seuil se situe aux environs de 20%. Cette condition implique que le matériau constituant l'élément de protection thermique contienne au moins 80% en volume de phases quasi-cristallines telles que définies ci-dessus.

Aux températures inférieures à environ 700°C, les éléments de protection thermique peuvent être utilisés comme barrières thermiques. De telles conditions de température correspondent à la plupart des applications domestiques ou dans le domaine de l'automobile. En outre, ils ont une grande aptitude à résister aux contraintes dues à la dilatation du support et leur coefficient de dilatation est intermédiaire entre celui des alliages métalliques et celui des oxydes isolants. De préférence, pour les températures supérieures à environ 600°C, les alliages quasicristallins constituant les barrières thermiques peuvent contenir des éléments stabilisants choisis parmi W, Zr, Ti, Rh, Nb, Hf et Ta. La teneur en élément stabilisant est inférieure ou égale à 2% en nombre d'atomes.

Les barrières thermiques de la présente invention peuvent être des barrières multi-couches présentant une alternance de couches de matériaux bons conducteurs de la chaleur et de couches de matériaux mauvais conducteurs (alliages quasi-cristallins). De telles structures constituent par exemple des barrières thermiques abradables.

Pour les applications dans lesquelles les températures atteignent des valeurs supérieures à environ 600°C, les éléments de protection thermique de la présente invention peuvent être utilisés comme sous-couche d'accrochage pour une couche servant de barrière thermique et constituée par un matériau de l'art antérieur tel que la zircone. Dans ces domaines de température, les matériaux constituant les éléments de protection thermique de la présente invention deviennent superplastiques. Ils correspondent donc bien aux conditions d'emploi requises pour la réalisation d'une sous-couche d'accrochage tout en étant capables de participer eux-mêmes à l'isolation du substrat. Ainsi, les éléments de protection thermique de la présente invention peuvent être utilisés jusqu'à quelques dizaines de degrés du point de fusion du matériau qui les constitue. Cette limite se situe aux environs de 950°C à 1200°C selon la composition.

Un élément de protection thermique de la présente invention est élaboré en déposant le ou les matériaux le constituant en une ou plusieurs couches sur un substrat. Le matériau quasi-cristallin est déposé par un procédé de projection thermique, par exemple à l'aide d'un chalumeau oxy-gaz, d'un chalumeau supersonique, d'une torche à plasma.

EXEMPLE 1

Différents échantillons d'alliages massifs, dont la composition est donnée dans le tableau 1 ci-dessous, ont été élaborés par fusion des éléments purs dans un champ haute fréquence sous atmosphère d'argon dans un creuset en cuivre refroidi. La masse totale ainsi élaborée était comprise entre 50 g et 100 g d'alliage. La température de fusion, qui dépend de la composition de l'alliage, est comprise dans l'intervalle de température situé entre 950 et 1200°C. Pendant le maintien en fusion de l'alliage, une éprouvette cylindrique pleine de $10 \pm 0,5$ mm de diamètre et de quelques cm de hauteur a été formée par aspiration du métal liquide dans un tube de quartz. La vitesse de refroidissement de cet échantillon était voisine de 250°C par seconde. Cet échantillon a été ensuite découpé avec une scie diamantée pour obtenir des éprouvettes cylindriques d'environ 3 mm d'épaisseur. Les faces opposées de chaque cylindre ont été polies mécaniquement sous eau en prenant un grand soin à garantir leur parallélisme. L'état structural des éprouvettes a été déterminé par diffraction des rayons X et par microscopie électronique. Tous les échantillons sélectionnés (échantillons 1 à 8) contenaient au moins 90% en volume de phase quasicristalline selon la définition donnée ci-dessus.

EXEMPLE 2

La diffusivité thermique $\alpha$, la masse spécifique $\rho$ et la chaleur spécifique Cp ont été déterminées au voisinage de la température ambiante pour les échantillons préparés ci-dessus.

La conductivité thermique est donnée par le produit $\lambda=\alpha\rho$Cp.

La diffusivité thermique $\alpha$ a été déterminée à l'aide d'un dispositif de laboratoire associant la méthode du flash laser à un détecteur semi-conducteur Hg-Cd-Te. Le laser a été utilisé pour fournir des impulsions de puissance entre 20 J et 30 J d'une durée de $5.10^{-4}$ s, pour chauffer la face frontale de l'éprouvette et le thermomètre semi-conducteur servait à détecter la réponse thermique sur la face opposée de l'éprouvette. La diffusivité thermique a été déduite des expériences selon la méthode décrite dans "A. Degiovanni, High Temp. - High Pressure, 17 (1985) 683.

La chaleur spécifique de l'alliage a été déterminée dans la plage de températures 20-80°C avec un calorimètre à balayage SETARAM.

La conductivité thermique $\lambda$ est déduite des deux précédentes mesures, connaissant la masse spécifique de l'alliage qui a été mesurée par la méthode d'Archimède par immersion dans du phtalate de butyle maintenu à 30°C ($\pm$ 0,1°C).

Les valeurs obtenues sont reportées dans le tableau 1. Ce tableau contient, à titre de comparaison, les valeurs concernant quelques matériaux de l'art antérieur, dont certains sont connus comme barrière thermique (échantillons 9 à 12).

TABLEAU 1

| | Composition | $\alpha$ $m^2 s^{-1}.10^6$ | $\rho$ $kg\,m^{-3}$ | $Cp$ $J\,kg^{-1}\,K^{-1}$ | $\lambda = \alpha\,\rho\,Cp$ $W\,kg^{-1}\,K^{-1}$ | % volume phase majoritaire |
|---|---|---|---|---|---|---|
| 1 | $Al_{13}Fe_4$ | 1,5 | 3870 | 610 | 2,95 | 100% m |
| 2 | $Al_{65,5}Cu_{18,5}Fe_8Cr_8$ | 1,05 | 4300 | 620 | 2,8 | 100% O/D |
| 3 | $Al_{65}Cu_{20}Fe_{10}Cr_5$ | 1,55± 0,1 | 4260 ± 150 | 680 | 4,5 | 100% O/D |
| 4 | $Al_{63,5}Cu_{24}Fe_{12,5}$ porosité de 3% | 0,85 ± 0,02 | 3950 ± 200 | 600 | 2 | 100% R/I |
| 5 | $Al_{63,5}Cu_{24}Fe_{12,5}$ porosité de 8% | 0,50 ± 0,02 | 3700 ± 200 | 590 | 1,1 | 100% R/I |
| 6 | $Al_{61,3}Cu_{23,6}Fe_{11,6}B_{3,5}$ | 1,15 | 3800 | 600 | 2,6 | >90% R/I |
| 7 | $Al_{63}Cu_{17,5}Co_{17,5}Si_2$ | 1,3± 0,06 | 4200 ± 200 | 675 | 3,7 | >95% O'/D' |
| 8 | $Al_{71}Pd_{19}Mn_{10}$ | 1,0 | | | | 100% I' |
| 9 | Al fcc | 90-100 | 2700 | 900 | 230 | |
| 10 | $Al_2O_3$ | 8,5 | 3800 | 1050 | 34 | |
| 11 | acier inoxydable | 4 | 7850 | 480 | 15 | |
| 12 | $ZrO_2$-$Y_2O_3$ 8% | 0,8 | 5700 | 400 | 2 | |
| 13 | $Al_6Mn$ | 5,4 | | | | |
| 14 | $Al_{13}Si_4Cr_{14}$ | 7,4 | | | | |
| 15 | $Al_5Ti_2Cu$ | 7,0 | | | | |
| 16 | $Al_7Cu_2Fe$ | 6,2 | | | | |
| 17 | $Al_2Cu$ | 14-17 | | | | |

Dans ce tableau, les sigles de la dernière colonne ont la signification suivante :

m: approximant monoclinique (P.J. Black, Acta Cryst. **8** (1955) 43)

O: approximants orthorhombiques (C. Dong, J. M. Dubois, J. Materials Science, **26** (1991), 1647

D: phase décagonale (L. Bendersky, Quasicrystal with One Dimensional Translational Symmetry and a Tenfold Rotation Axis, Physical Review Letters, Vol. 55, n° 14, 1985, pages 1461-1463).

R: approximant rhomboédrique (M. Audier et P. Guyot, 3rd Int. Meeting on Quasicrystals, eds. J. Yacaman, World Scientific, Singapore, 1990).

I: phase icosaédrique (D. Shechtman, I. Blech, D. Gratias, J.W. Cahn, Metallic Phase with Long-Range Orientational Order and No Translational Symmetry, Physical Review Letters, Vol. 53, n° 20, 1984, pages 1951-1953)

O': approximants orthorhombiques (C. Dong et al, J. Mat. Science, vol.26, 1991, 1647)

D': phase décagonale (W. Steurer, K. H. Kuo, Phil. Mag. Letters, 61 (1990) 15)

I': phase icosaédrique (A. P. Tsai et al, Phil. Mag. Lett. 61 (1990) 15)

Ces résultats font apparaître que, à température ambiante, la conductivité thermique des alliages quasicristallins constituant les éléments de protection de la présente invention (échantillons 1 à 8) est considérablement inférieure à celle des matériaux métalliques (aluminium métal ou $Al_2Cu$ quadratique), donnés à titre de comparaison. Elle est inférieure de deux ordres de grandeur à celle de l'aluminium et d'un ordre de grandeur à celle de l'acier inoxydable considéré habituellement comme un bon isolant thermique. En outre, elle est inférieure à celle de l'alumine et tout-à-fait comparable à celle de la zircone dopée par $Y_2O_3$, considéré comme l'archétype des isolants thermiques dans l'industrie.

A titre de comparaison, la diffusivité des alliages 13 à 17 a été déterminée. Ces alliages, qui forment des composés définis de l'aluminium, présentent des compositions voisines de celles des alliages quasi-cristallins utilisables pour les éléments de protection de la présente invention. Toutefois, ils ne présentent pas la structure quasi-cristalline définie ci-dessus. Dans tous les cas, leur diffusivité thermique est supérieure à $5.10^{-6}$ $m^2/s$, c'est-à-dire bien supérieure à celle des alliages retenus pour la présente invention.

EXEMPLE 3

Les valeurs de $\alpha$ ont été relevées en fonction de la température jusqu'à 900°C.

La mesure de la diffusivité thermique a été effectuée selon la méthode de l'exemple 2. Chaque éprouvette a été placée sous flux d'argon purifié au centre d'un four chauffé par effet Joule ; la vitesse de montée en température, programmée par ordinateur, variait linéairement à raison de 5°C/mn. Tous les échantillons conformes à la présente invention présentent une augmentation approximativement linéaire de $\alpha$ avec la température. La valeur de $\alpha$ déterminée à 700°C est proche du double de celle qui est mesurée à la température ambiante. De même, la chaleur spécifique augmente avec la température et atteint de 800 à 900 J/kgK à 700°C. La masse spécifique diminue de l'ordre de 1 à 2% comme l'indiquent des mesures de dilatation thermique ou de diffraction des neutrons. Par conséquent, la conductivité thermique reste inférieure à 12 W/mK, c'est-à-dire à la conductivité thermique des aciers inoxydables qui sont utilisés pour certaines applications d'isolation thermique. Pour certains alliages, on note cependant de bien meilleures performances: par exemple pour l'alliage $Al_{63,5}Cu_{24}Fe_{12,5}$ (alliage 4), $\lambda$ est de 3,2 W/mK à 700°C.

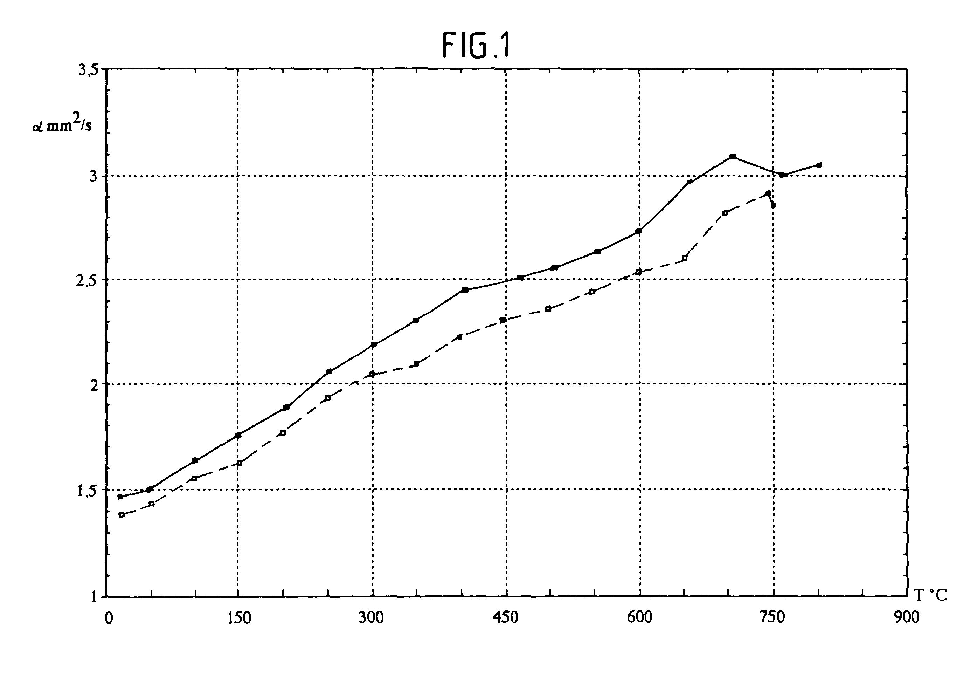

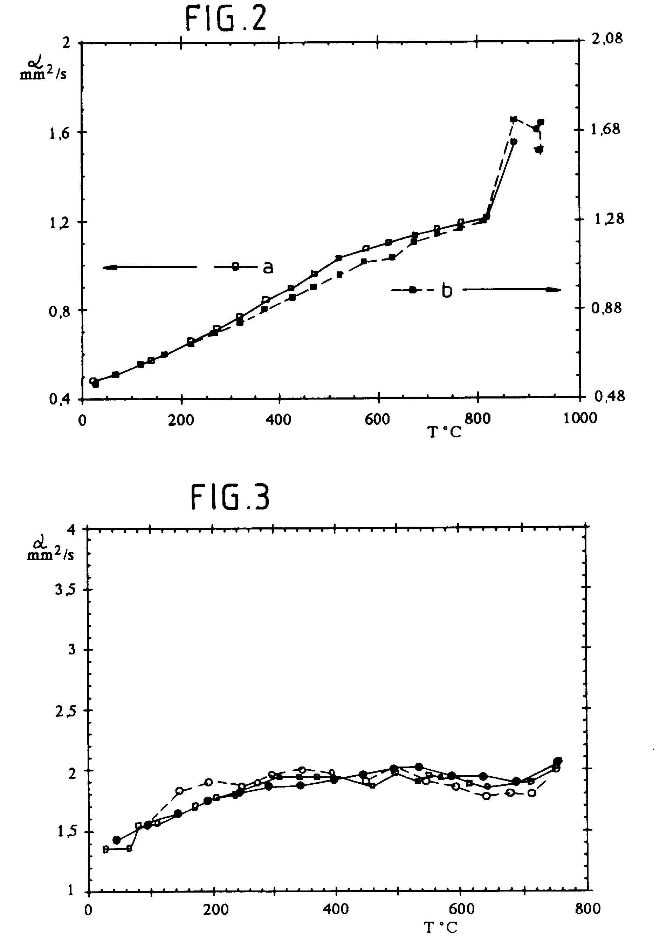

Les figures 1, 2 et 3 représentent respectivement l'évolution de $\alpha$ en fonction de la température T pour différents matériaux dans les conditions suivantes :

- fig. 1 : les mesures enregistrées lors du chauffage de l'alliage $Al_{65}Cu_{20}Fe_{10}Cr_5$ (alliage 3) sont représentées par des carrés noirs, celles enregsitrées lors du refroidissement par des carrés blancs.
- fig. 2 : Chauffage pour l'alliage $Al_{63,5}Cu_{24}Fe_{12,5}$ (alliage 5) dans l'état d'approximant rhomboédrique (a) et de phase icosaédrique (b). Au-dessus de 860°C, l'alliage se transforme en un mélange de phases cristallines, d'où l'augmentation de $\alpha$, puis fond vers 950°C.
- fig. 3 : $Al_{63}Cu_{17,5}Co_{17,5}Si_2$ (alliage 7). Les mesures représentées par un cercle ont été enregistrées lors d'un premier chauffage ; celles représentées par un disque noir ont été enregistrées lors du premier refroidissement et celles représentées par un carré lors d'un second chauffage. Il apparaît que la diffusivité est réversible et varie entre 1,3 et $2.10^{-6}$ $m^2/s$ entre 20°C et 750°C.

EXEMPLE 4

La variation de la dilatation thermique des alliages $Al_{63,5}Cu_{24}Fe_{12,5}$ et $Al_{63}Cu_{17,5}Co_{17,5}Si_2$ a été mesurée. Les courbes de dilatation thermique respectives font apparaître que le coefficient de dilatation dépend très peu de la tem-

7

EP 0 572 646 B1

pérature et vaut 8.10$^{-6}$/°C pour le premier cité, 11.10$^{-6}$/°C pour le second, valeurs proches de celles des aciers inoxydables.

EXEMPLE 5

Le comportement superplastique de certains alliages susceptibles de constituer les éléments de protection thermique de la présente invention a été étudié. Des éprouvettes cylindriques de 4 mm de diamètre et de 10 mm de longueur, à faces rigoureusement parallèles, ont été réalisés selon la même méthode que celles de l'exemple 1 avec les alliages $Al_{63,5}Cu_{24}Fe_{12,5}$ et $Al_{62,5}Cu_{18,5}Fe_8Cr_8Si_3$. Ces éprouvettes ont été soumises à des essais mécaniques en compression sur une machine INSTROM. Des essais ont été effectués jusqu'à une charge de 250 MPa, à une vitesse de déplacement de la poutre de 50 µm/min, la température étant maintenue constante entre 600 et 850°C. Les alliages manifestent un comportement superplastique dès 600°C.

EXEMPLE 6

Elaboration d'éléments de protection thermique selon l'invention et selon l'art antérieur.

Une première série d'échantillons a été réalisée. Le substrat était un cylindre massif de cuivre ayant un diamètre de 30 mm et une hauteur de 80 mm et le revêtement a été appliqué à la torche à plasma selon une technique classique. L'échantillon C0 est le cylindre de cuivre non revêtu. L'échantillon C1 a été revêtu sur toute sa surface d'une couche de 1 mm d'épaisseur de l'alliage $Al_{65,5}Cu_{18,5}Fe_8Cr_8$ (alliage 2). L'échantillon C6 comporte une couche d'un matériau constituant l'élément de protection thermique de la présente invention servant de couche d'accrochage et une couche de zircone yttriée. Les échantillons C3 et C4 servant de comparaison comportent respectivement une couche de zircone et une couche d'alumine. Une autre série d'échantillons a été réalisée avec, comme support, un tube d'acier inoxydable ayant une longueur de 50 cm, un diamètre de 40 mm, une épaisseur de paroi de 1 mm (échantillons A0 à A2). Dans chaque cas, le tube support est revêtu à l'une de ses extrémités sur une longueur de 30 cm. Dans ce dernier cas, les dépôts ont été effectués au chalumeau oxy-gaz, sauf pour le dépôt de zircone de l'échantillon A2 qui a été effectué à la torche à plasma. Le tableau 2 ci-dessous donne la nature et l'épaisseur des couches pour les différents échantillons. La précision sur les épaisseurs finales des dépôts était de ± 0,3 mm.

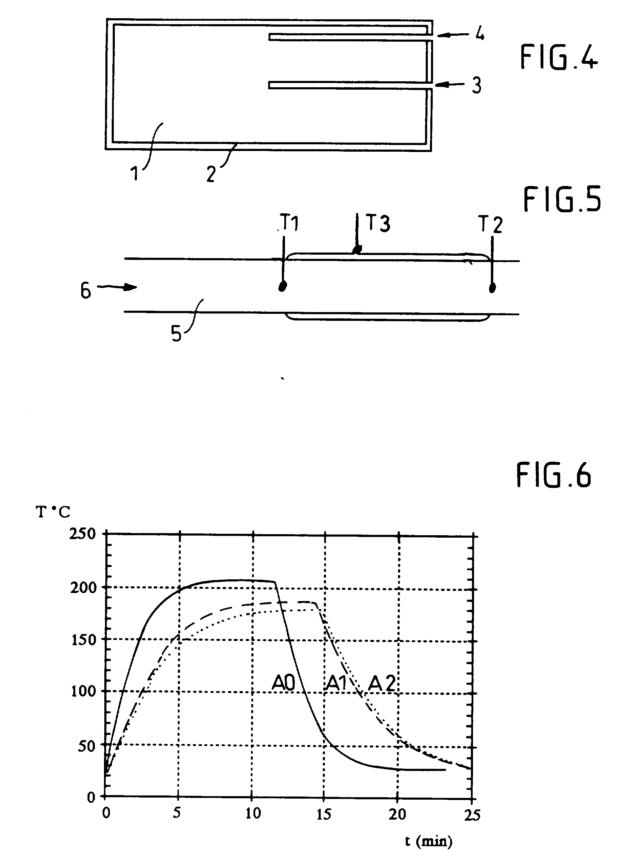

Tous les échantillons ont été munis de thermocouples Chromel - Alumel à très faible inertie. La figure 4 représente un échantillon du type cylindre de cuivre 1 comportant un revêtement 2 et muni d'un thermocouple central 3 et d'un thermocouple latéral 4, les deux étant insérés jusqu'à la moitié de la longueur du cylindre. La figure 5 représente un tube creux 5 dans lequel on fait passer un flux d'air chaud 6 et qui est muni de trois thermocouples désignés respectivement par T1, T2 et T3, les deux premiers étant à l'intérieur du tube et placés respectivement au début de la zone revêtue et à la fin de la zone revêtue, et le troisième étant sur la surface du revêtement.

EXEMPLE 7

Utilisation des éléments de protection comme protection par rapport à une flamme.

Les échantillons C0, C1, C3 et C6 ont été placés sur leur base sur une brique réfractaire. Des impulsions de chaleur successives d'une durée de 10 s ont été appliquées à chaque éprouvette à intervalle de 60 s et la réponse des thermocouples a été enregistrée. Ces impulsions ont été produites par la flamme d'un chalumeau, placé à distance constante de l'échantillon et orientée face au thermocouple proche de la surface. Le débit des gaz de combustion a été soigneusement contrôlé et maintenu constant durant toute l'expérience. Deux séries d'expériences ont été menées : l'une avec des éprouvettes initialement à 20°C et l'autre avec des éprouvettes initialement à 650°C.

L'échantillon C0 permet de définir trois paramètres qui résument les résultats de l'expérience, à savoir la différence maximale P de température entre les deux thermocouples, $\Delta T/\Delta t$ la vitesse de montée en température du thermocouple latéral 4 durant l'impulsion et l'incrément de température $\Delta T$ réalisé au centre de l'éprouvette (thermocouple 3). Ces données figurent dans le tableau 2. Ces résultats font apparaître que les éléments de protection de la présente invention, utilisés comme barrière thermique, présentent des performances au moins équivalentes à celles de la zircone.

Dans les échantillons C6 et A2, les éléments de protection thermique de la présente invention constituent une sous-couche. On a constaté que la couche de zircone de l'échantillon C3 ne résistait pas à plus de trois impulsions de chaleur et était fissurée dès la première impulsion. Pour l'échantillon C6, soumis également à une série d'impulsions thermiques, la température de surface du dépôt de zircone, mesurée par un troisième thermocouple placé en contact avec le dépôt à la fin des essais, s'est stabilisée à 1200°C. L'expérience a porté sur 50 impulsions et l'échantillon C6 a résisté sans dommage apparent, bien que le coefficient de dilatation du cuivre soit proche du double de celui de l'alliage quasi-cristallin, ce qui impliquerait d'importantes contraintes de cisaillement à l'interface substrat/dépôt, si le matériau de sous-couche ne devenait pas plastique. Les éléments de protection thermique de la présente invention sont donc bien adaptés à la réalisation de sous-couches d'accrochage, en particulier pour des barrières thermiques.

TABLEAU 2

| | matériau de revêtement | 20-100°C | | | 650-550°C | | |
|---|---|---|---|---|---|---|---|
| | | $\Delta T$ ±0,5°C | $\Delta T/\Delta t$ °C/s | P ±0,5°C | $\Delta T$ ±0,5°C | $\Delta T/\Delta t$ °C/s | P ±0,5°C |
| | | °C | | °C | °C | | °C |
| C0 | néant | 27 | 2,85 | 5,4 | 22 | 2,3 | <1 |
| C1 | $Al_{65,5}Cu_{18,5}Fe_8Cr_8$ 1 mm | 25 | 2,7 | 3,8 | 11 | 1,1 | 6 |
| C6 | $Al_{65,5}Cu_{18,5}Fe_8Cr_8$ 0,5 mm $ZrO_2$-$Y_2O_3$8% 1 mm | 24 | 2,6 | 4,0 | 13 | 1,0 | 2,5 |
| C3 | zircone 1 mm | 24 | 2,75 | 4,7 | 14 | 1,5 | 2,3 |
| C4 | alumine 1 mm | 27 | 2,7 | 6,5 | 25 | 3,0 | 8,2 |
| A0 | néant | - | - | - | - | - | - |
| A1 | $Al_{65,5}Cu_{18,5}Fe_8Cr_8$ 1,5 mm | - | - | - | - | - | - |
| A2 | $Al_{65,5}Cu_{18,5}Fe_8Cr_8$ 0,3 mm $ZrO_2$-$Y_2O_3$ 8% 1,2 mm | - | - | - | - | - | - |

EXEMPLE 8

Application d'un élément de protection thermique de la présente invention à l'isolation d'un réacteur.

Les échantillons A0 et A1 ont été utilisés pour évaluer l'aptitude des alliages de l'invention à isoler thermiquement un dispositif. Une comparaison a été faite par rapport aux propriétés d'une barrière de zircone munie d'une couche d'accrochage (échantillon A2). Les échantillons étaient munis chacun de 3 thermocouples T1, T2 et T3 tels que représentés sur la figure 5. Un courant d'air chaud à débit constant a été envoyé à travers le tube en acier inoxydable constituant le substrat de chaque échantillon. La température de l'air à l'entrée, mesurée à l'aide du thermocouple T1, était de 300±2°C. La température de surface, mesurée à l'aide du thermocouple T3, a été enregistrée en fonction du temps à partir de la mise en route du générateur d'air chaud. Le thermocouple T2 a permis de vérifier que les conditions transitoires d'établissement du flux d'air chaud étaient identiques pour toutes les mesures.

La figure 6 représente l'évolution de la température du surface de chacun des échantillons A0, A1 et A2 en fonction du temps. La température du surface de l'échantillon A0 (sans revêtement) dépasse à l'équilibre celle de l'échantillon de zircone de 35°C environ. Les éléments de protection thermique de la présente invention donnent des résultats proches de celui de la couche de zircone puisqu'on mesure un écart de température de 10°C seulement entre l'échantillon A1 (revêtement quasi-cristallin) et l'échantillon A2 (revêtement de zircone servant de référence).

**Revendications**

1. Utilisation, pour l'élaboration d'un élément de protection thermique d'un substrat, d'un matériau qui est déposé sur le substrat par projection thermique et qui est constitué essentiellement par un alliage quasicristallin d'aluminium constitué d'une ou plusieurs phases quasi-cristallines qui sont soit des phases quasi-cristallines au sens strict, soit les phases approximantes, lesdites phases quasi-cristallines présentant une diffusivité thermique mesurée à la température ambiante inférieure à $2,5.10^{-6}$ m2/s, et une diffusivité thermique mesurée dans l'intervalle de température 650-750°C qui n'excède pas la diffusivité thermique mesurée à la température ambiante de plus d'un facteur 3.

2. Utilisation pour l'élaboration d'un élément de protection thermique selon la revendication 1, caractérisée en ce que la diffusivité du matériau à température ambiante est inférieure à $1,6.10^{-6}$ m2/s.

3. Utilisation pour l'élaboration d'un élément de protection thermique selon la revendication 1, caractérisée en ce que l'alliage quasi-cristallin présente la composition nominale (I) suivante : $Al_aCu_bFe_cY_eI_g$, dans laquelle Y représente au moins un élément choisi parmi V, Mo, Ti, Zr, Nb, Cr, Mn, Ru, Rh, Ni, Mg, W, Si et les terres rares, I représente les impuretés d'élaboration inévitables, $0\leq g\leq2$, $14\leq b\leq30$, $7\leq c\leq20$, $0\leq e\leq10$, $c+e\leq10$ et $a+b+c+e+g=100\%$ en nombre d'atomes.

**EP 0 572 646 B1**

4. Utilisation pour l'élaboration d'un élément de protection thermique selon la revendication 1, caractérisée en ce que l'alliage quasi-cristallin présente l'une des compositions nominales suivantes :

- $Al_aCu_bFe_cX_dY_eI_g$, (II) dans laquelle X représente au moins un élément choisi parmi B, C, P, S, Ge et Si, Y représente au moins un élément choisi parmi V, Mo, Ti, Zr, Nb, Cr, Mn, Ru, Rh, Ni, Mg, W, Hf, Ta et les terres rares, I représente les impuretés d'élaboration inévitables, $0 \leq g \leq 2$, $14 \leq b \leq 30$, $7 \leq c \leq 20$, $0 \leq d \leq 5$, $21 \leq b+c+e \leq 45$, et $a+b+c+e+g=100\%$ en nombre d'atomes ;
- $Al_aPd_bMn_cX_dY_eT_fI_g$ (III) dans laquelle X représente au moins un métalloïde choisi parmi B, C, Si, Ge, P, et S ; Y représente au moins un métal choisi parmi Fe, Mn, V, Ni, Cr, Zr, Hf, Mo, W, Nb, Ti, Rh, Ru, Re, Ta ; T est au moins une terre rare ; I représente les impuretés d'élaboration inévitables ; avec $a+b+c+d+e+f+g=100\%$ atomique ; $15 \leq b \leq 25$ ; $6 \leq c \leq 16$ ; $21 \leq b+c+e \leq 45$ ; $0 \leq f \leq 4$ ; $0 \leq g \leq 2$ ; $0 \leq d \leq 5$ ;
- $Al_aCu_bCo_cX_dY_eT_fI_g$ (IV) dans laquelle X représente au moins un métalloïde choisi parmi B, C, Si, Ge, P et S ; Y représente au moins un métal choisi parmi Fe, Mn, V, Ni, Cr, Zr, Hf, Mo, W, Nb, Ti, Rh, Ru, Re ; T est au moins une terre rare ; I représente les impuretés d'élaboration inévitables; avec $a+b+c+d+e+f+g=100\%$ atomique ; $14 \leq b \leq 27$ ; $8 \leq c \leq 24$ ; $28 \leq b+c+e \leq 45$ ; $0 \leq f \leq 4$ ; $0 \leq d \leq 5$ ; $0 \leq g \leq 2$ ;
- $Al_aX_dY_eI_g$, (V) dans laquelle X représente au moins un élément choisi parmi B, C, P, S, Ge et Si, Y représente au moins un élément choisi parmi V, Mo, Cr, Mn, Fe, Co, Ni, Ru, Rh et Pd, I représente les impuretés d'élaboration inévitables, $0 \leq g \leq 2$, $0 \leq d \leq 5$, $18 \leq e \leq 29$, et $a+d+e+g=100\%$ en nombre d'atomes.

5. Utilisation pour l'élaboration d'un élément de protection selon la revendication 1, caractérisée en ce que le matériau déposé sur le substrat comporte au moins 80% en volume d'au moins une phase quasi-cristalline.

6. Utilisation pour l'élaboration d'un élément de protection thermique selon la revendication 1, caractérisée en ce que l'alliage d'aluminium quasicristallin présente une porosité supérieure à 10%.

7. Utilisation pour l'élaboration d'un élément de protection selon la revendication 1, caractérisée en ce que le matériau est utilisé sous forme d'un revêtement appliqué sur un support et qu'il constitue une barrière thermique à des températures inférieures à 700°C.

8. Utilisation pour l'élaboration d'un élément de protection selon la revendication 7, caractérisé en ce que l'alliage contient des éléments stabilisants à une teneur inférieure à 2 % en nombre d'atomes, choisis parmi W, Zr, Ti, Rh, Nb, Hf et Ta.

9. Utilisation pour l'élaboration d'un élément de protection selon la revendication 1, caractérisé en ce que le matériau est utilisé sous forme d'une couche intermédiaire entre un support et une barrière thermique.

10. Utilisation pour l'élaboration d'un élément de protection selon la revendication 7, caractérisé en ce que l'élément de protection thermique est constitué par une alternance de couches d'alliages quasi-cristallins et de couches de matériaux bons conducteurs de la chaleur.

**Patentansprüche**

1. Verwendung eines Materials zur Herstellung eines thermischen Schutzelements für ein Substrat, welches Material durch Heißspritzen auf dem Substrat abgelagert wird und im wesentlichen aus einer quasikristallinen Aluminiumlegierung besteht, die aus einer oder mehreren quasikristallinen Phasen besteht, wobei es sich entweder um quasikristalline Phasen im engen Sinne oder um sich daran approximanten Phasen handelt, wobei die quasikristallinen Phasen eine bei Umgebungstemperatur gemessene Wärmeleitzahl von unter $2,5.10^{-6}$ m$^2$/s und eine im Temperaturbereich von 650-750°C gemessene Wärmeleitzahl aufweisen, die die bei Umgebungstemperatur gemessene Wärmeleitzahl um nicht mehr als einen Faktor von 3 übersteigt.

2. Verwendung zur Herstellung eines thermischen Schutzelements nach Anspruch 1, dadurch gekennzeichnet, daß die Wärmeleitzahl des Materials bei Umgebungstemperatur unter $1,6.10^{-6}$ m$^2$/s liegt.

3. Verwendung zur Herstellung eines thermischen Schutzelements nach Anspruch 1, dadurch gekennzeichnet, daß die quasikristalline Legierung die folgende Nominal-Zusammensetzung der Formel (I) aufweist: $Al_aCu_bFe_cY_eI_g$, worin Y zumindest ein Element darstellt, das aus V, Mo, Ti, Zr, Nb, Cr, Mn, Ru, Rh, Ni, Mg, W, Si und den Seltenerdelementen ausgewählt ist, I die bei der Herstellung unvermeidlichen Verunreinigungen darstellt, sowie gilt: $0 \leq g \leq 2$,

$14 \leq b \leq 30$, $7 \leq c \leq 20$, $0 \leq e \leq 10$, $c + e \geq 10$ und $a + b + c + e + g = 100\%$ der Atomanzahl.

4. Verwendung zur Herstellung eines thermischen Schutzelements nach Anspruch 1, dadurch gekennzeichnet, daß die quasikristalline Legierung eine der nachfolgend angeführten Nominal-Zusammensetzungen aufweist:

- $Al_aCu_bFe_cX_dY_eI_g$ (II), worin X zumindest ein Element darstellt, das aus B, C, P, S, Ge und Si ausgewählt ist, Y zumindest ein Element darstellt, das aus V, Mo, Ti, Zr, Nb, Cr, Mn, Ru, Rh, Ni, Mg, W, Hf, Ta und den Seltenerdelementen ausgewählt ist, I die bei der Herstellung unvermeidlichen Verunreinigungen darstellt, sowie gilt: $0 \leq g \leq 2$, $14 \leq b \leq 30$, $7 \leq c \leq 20$, $0 \leq d \leq 5$, $21 \leq b + c + e \leq 45$ und $a + b + c + e + g = 100\%$ der Atomanzahl;

- $Al_aPd_bMn_cX_dY_eT_fI_g$ (III), worin X zumindest ein Metalloid darstellt, das aus B, C, Si, Ge, P und S ausgewählt ist; Y zumindest ein Metall darstellt, das aus Fe, Mn, V, Ni, Cr, Zr, Hf, Mo, W, Nb, Ti, Rh, Ru, Re und Ta ausgewählt ist; T zumindest ein Seltenerdelement ist; I die bei der Herstellung unvermeidlichen Verunreinigungen darstellt; sowie gilt: $a + b + c + d + e + f + g = 100\%$ der Atome; $15 \leq b \leq 25$; $6 \leq c \leq 16$; $21 \leq b + c + e \leq 45$; $0 \leq f \leq 4$; $0 \leq g \leq 2$; $0 \leq d \leq 5$;

- $Al_aCu_bCo_cX_dY_eT_fI_g$ (IV), worin X zumindest ein Metalloid darstellt, das aus B, C, Si, Ge, P und S ausgewählt ist; Y zumindest ein Metall darstellt, das aus Fe, Mn, V, Ni, Cr, Zr, Hf, Mo, W, Nb, Ti, Rh, Ru und Re ausgewählt ist; T zumindest ein Seltenerdelement ist; I die bei der Herstellung unvermiedlichen Verunreinigungen darstellt; sowie gilt: $a + b + c + d + e + f + g = 100\%$ der Atome; $14 \leq b \leq 27$; $8 \leq c \leq 24$; $28 \leq b + c + e \leq 45$; $0 \leq f \leq 4$; $0 \leq d \leq 5$; $0 \leq g \leq 2$;

- $Al_aX_dY_eI_g$ (V), worin X zumindest ein Element darstellt, das aus B, C, P, S, Ge und Si ausgewählt ist, Y zumindest ein Element darstellt, das aus V, Mo, Cr, Mn, Fe, Co, Ni, Ru, Rh und Pd ausgewählt ist, I die bei der Herstellung unvermeidlichen Verunreinigungen darstellt, sowie gilt: $0 \leq g \leq 2$, $0 \leq d \leq 5$, $18 \leq e \leq 29$ und $a + d + e + g = 100\%$ der Atomanzahl.

5. Verwendung zur Herstellung eines Schutzelements nach Anspruch 1, dadurch gekennzeichnet, daß das auf dem Substrat abgelagerte Material zumindest 80 Vol.-% zumindest einer quasikristallinen Phase umfaßt.

6. Verwendung zur Herstellung eines thermischen Schutzelements nach Anspruch 1, dadurch gekennzeicnet, daß die quasikristalline Aluminiumlegierung eine Porosität von über 10% aufweist.

7. Verwendung zur Herstellung eines Schutzelements nach Anspruch 1, dadurch gekennzeichnet, daß das Material in Form eines auf einem Träger aufgetragenen Überzugs eingesetzt wird und daß es bei einer Temperatur von unter 700°C eine thermische Barriere darstellt.

8. Verwendung zur Herstellung eines Schutzelements nach Anspruch 7, dadurch gekennzeichnet, daß die Legierung stabilisierende Elemente mit einem Gehalt von unter 2% bezogen auf die Anzahl der Atome enthält, die aus W, Zr, Ti, Rh, Nb, Hf und Ta ausgewählt sind.

9. Verwendung zur Herstellung eines Schutzelements nach Anspruch 1, dadurch gekennzeichnet, daß das Material in Form einer Zwischenschicht zwischen einem Träger und einer thermischen Barriere eingesetzt wird.

10. Verwendung zur Herstellung eines Schutzelements nach Anspruch 7, dadurch gekennzeichnet, daß das thermische Schutzelement abwechselnd aus Schichten einer quasikristallinenen Legierung und aus Schichten eines gut wärmeleitenden Materials besteht.

## Claims

1. Use for the production of an element for heat protection of a substrate, of a material which is deposited on the substrate by thermal spraying and which consists essentially of a quasicrystalline aluminium alloy consisting of one or a number of quasicrystalline phases which are either quasicrystalline phases in the strict sense, or approximating phases, said quasicrystalline phases exhibiting a thermal diffusivity, measured at ambient temperature, which is lower than $2.5 \times 10^{-6}$ $m^2$/s, and a thermal diffusivity measured in the temperature range 650-750°C which does not exceed the thermal diffusivity measured at the ambient temperature by more than a factor of 3.

2. Use for the production of an element for heat protection according to claim 1, characterized in that the diffusivity of the material at ambient temperature is lower than $1.6 \times 10^{-6}$ $m^2$/s.

3. Use for the production of an element for heat protection according to claim 1, characterized in that the quasicrystalline alloy has the following nominal composition (I) : $Al_aCu_bFe_cY_eI_g$, in which Y denotes at least one element chosen from V, Mo, Ti, Zr, Nb, Cr, Mn, Ru, Rh, Ni, Mg, W, Si and the rare earths, I denotes the unavoidable production impurities, $0 \leq g \leq 2$, $14 \leq b \leq 30$, $7 \leq c \leq 20$, $0 \leq e \leq 10$, $c+e \geq 10$ and $a+b+c+e+g=100\%$ in number of atoms.

4. Use for the production of an element for heat protection according to claim 1, characterized in that the quasicrystalline alloy has one of the following nominal compositions :

- $Al_a Cu_b Fe_c X_d Y_e I_g$, (II), in which X denotes at least one element chosen from B, C, P, S, Ge and Si, Y denotes at least one element chosen from V, Mo, Ti, Zr, Nb, Cr, Mn, Ru, Rh, Ni, Mg, W, Hf, Ta and the rare earths, I denotes the unavoidable production impurities, $0 \leq g \leq 2$, $14 \leq b \leq 30$, $7 \leq c \leq 20$, $0 \leq d \leq 10$, $21 \leq b+c+e \leq 45$, and $a+b+c+d+e+g=100\%$ in number of atoms ;
- $Al_a Pd_b Mn_c X_d Y_e T_f I_g$, (III), in which X denotes at least on metalloid chosen from B, C, Si, Ge, P, and S ; Y denotes at least one metal chosen from Fe, Mn, V, Ni, Cr, Zr, Hf, Mo, W, Nb, Ti, Rh, Ru, Re, Ta ; T is at least one rare earth ; I denotes the unavoidable production impurities ; with $a+b+c+d+e+f+g=100$ atom%; $15 \leq b \leq 25$; $6 \leq c \leq 16$; $21 \leq b+c+e \leq 45$; $0 \leq f \leq 4$; $0 \leq g \leq 2$; $0 \leq d \leq 5$;
- $Al_a Cu_b Co_c X_d Y_e T_f I_g$, (IV), in which X denotes at least one metalloid chosen from B, C, Si, Ge, P and S; Y denotes at least one metal chosen from Fe, Mn, V, Ni, Cr, Zr, Hf, Mo, W, Nb, Ti, Rh, Ru, Re; T is at least one rare earth; I denotes the unavoidable production impurities; with $a+b+c+d+e+f+g+=100$ atom%; $14 \leq b \leq 27$; $8 \leq c \leq 24$; $28 \leq b+c+e \leq 45$; $0 \leq f \leq b4$ ; $0 \leq d \leq b5$; $0 \leq g \leq 2$;
- $Al_a X_d Y_e I_g$, (V), in which X denotes at least one element chosen from B, C, P, S, Ge and Si, Y denotes at least one element chosen from V, Mo, Cr, Mn, Fe, Co, Ni, Ru, Rh and Pd, I denotes the unavoidable production impurities, $0 \leq g \leq 2$, $0 \leq d \leq 5$, $18 \leq e \leq 29$, and $a+d+e+g=100\%$ in number of atoms.

5. Use for the production of an element for heat protection according to claim 1, characterized in that the material deposited on the substrate comprises at least 80% by volume of at least one quasicrystalline phase.

6. Use for the production of an element for heat protection according to claim 1, characterized in that the quasicrystalline aluminium alloy has a porosity higher than 10%.

7. Use for the production of an element for heat protection according to claim 1, characterized in that the material is employed in the form of a coating applied onto a support and in that it constitutes a heat barrier at temperatures which are lower than 700°C.

8. Use for the production of an element for heat protection, characterized in that the alloy contains stabilizing elements at a content of less than 2% in number of atoms, which are chosen from W, Zr, Ti, Rh, Nb, Hf and Ta.

9. Use for the production of an element for heat protection according to claim 1, characterized in that the material is employed in the form of an intermediate layer between a support and a heat barrier.

10. Use for the production of an element for heat protection according to claim 7, characterized in that the element for heat protection consists of an alternation of layers of quasicrystalline alloys and of layers of materials which are good heat conductors.

# FIG.1

FIG.2

FIG.3

FIG.4

FIG.5

FIG.6